# EUROPÄISCHE PATENTANMELDUNG

(11) **EP 1 679 236 A1**
(43) Veröffentlichungstag der Anmeldung: **12.07.2006**
(21) Anmeldenummer: 05028736.6
(22) Anmeldetag: 30.12.2005
(51) Int. Cl.: B60R 21/015, B60R 21/16

(54) **Gassack für eine Fahrzeuginsassen-Rückhaltevorrichtung**

(30) Priorität: 11.01.2005 DE 202005000356 U
(71) Anmelder: TRW Automotive Safety Systems GmbH, 63743 Aschaffenburg (DE)
(72) Erfinder: Britz, Thomas, Dr., 63856 Bessenbach (DE)
(74) Vertreter: Strass, Jürgen

(57) **Zusammenfassung**

Ein Gassack für eine Fahrzeuginsassen-Rückhaltevorrichtung mit einer Gassackwand (16) ist dadurch gekennzeichnet, daß der Gassack (12) ein Gewebe (26) mit Fasern aufweist, die mit einem Material mit piezoelektrischen Eigenschaften beschichtet sind.

## Beschreibung

Die Erfindung betrifft einen Gassack für eine Fahrzeuginsassen-Rückhaltevorrichtung, mit einer Gassackwand. Die Erfindung betrifft ferner eine Fahrzeuginsassen-Rückhaltevorrichtung mit einem solchen Gassack.

Bei einem Gassack mit einer Abströmöffnung ist es wünschenswert, daß die Abströmöffnung während des Aufblasvorgangs möglichst geschlossen bleibt, damit die zum vollständigen Befüllen des Gassacks notwendige Gasmenge gering gehalten werden kann. Es ist weiterhin wünschenswert, die Härte des Gassacks an den jeweiligen Belastungsfall unter Berücksichtigung der Körpergröße und des Gewichts des Fahrzeuginsassen anzupassen. Dies kann bekanntermaßen durch eine vom Innendruck des Gassacks abhängige Freigabe der Abströmöffnung erreicht werden.

Es sind Gassäcke bekannt, bei denen eine Abströmöffnung mittels einer aktiven Einrichtung durch Zerstörung vorbestimmter Abschnitte des Gassacks freigegeben werden kann. Die GB-A-2 306 409 zeigt beispielsweise einen Gassack, an dem eine pyrotechnische Ladung angebracht ist, welche über eine elektrische Zuleitung gezündet werden kann.

Die Erfindung schafft einen Gassack, der im Belastungsfall eine zuverlässige Erfassung der auf den Gassack einwirkenden Kräfte ermöglicht.

Gemäß der Erfindung ist bei einem Gassack der eingangs genannten Art vorgesehen, daß der Gassack ein Gewebe mit Fasern aufweist, die mit einem Material mit piezoelektrischen Eigenschaften beschichtet sind. Derartige Fasern wurden z.B. von der Eidgenössischen Materialprüfungs- und Forschungsanstalt gemeinsam mit anderen Firmen entwickelt und vorgestellt (siehe http://www.empa.ch/plugin/template/empa/225/21999/---/1=1). Beim erfindungsgemäßen Gassack lassen sich durch die beschichteten Fasern, die als Sensoren dienen, Informationen über die tatsächliche Belastung des Gassacks gewinnen. Die mechanischen Kräfte, die beim Eintauchen des Fahrzeuginsassen in den aufgeblasenen Gassack auf die Fasern einwirken, werden durch die Beschichtung mit piezoelektrischem Material in elektrische Signale umgewandelt. Die für die Belastung des Gassacks repräsentativen elektrischen Signale können anschließend für verschiedene Zwecke genutzt werden. Insbesondere kann eine aktive Freigabe von Abströmöffnungen im Gassack oder in anderen Bauteilen des Gassackmoduls, in dem der Gassack untergebracht ist, in Abhängigkeit der elektrischen Signale erfolgen.

Die Gassackwand des erfindungsgemäßen Gassacks kann im wesentlichen vollständig oder nur teilweise aus dem Gewebe gebildet sein. Im kostengünstigeren letzteren Fall kann insbesondere ein Gewebeabschnitt eines bekannten Gassackdesigns, der einen repräsentativen Anteil der Kraft des eintauchenden Fahrzeuginsassen aufnimmt, durch das Gewebe mit den beschichteten Fasern ersetzt werden.

Gemäß einer alternativen Ausführungsform ist das Gewebe an der Gassackwand befestigt. Die Gassackwand kann in diesem Fall vollständig aus herkömmlichem Material bestehen, wobei das Gewebe mit den beschichteten Fasern nachträglich aufgebracht wird.

Die Erfindung schafft auch eine Fahrzeuginsassen-Rückhaltevorrichtung mit einem erfindungsgemäßen Gassack, die eine elektronische Steuerung zur Erfassung und Auswertung der elektrischen Signale des Gewebes umfaßt.

Gemäß einer bevorzugten Ausführungsform der Erfindung weist der Gassack eine an der Gassackwand angeordnete elektrisch ansteuerbare Einrichtung auf, insbesondere eine Einrichtung, mit der unter bestimmten Umständen eine Abströmöffnung im Gassack zu einem definierten Zeitpunkt freigegeben werden kann.

Die bevorzugte Ausführungsform sieht ferner vor, daß die elektronische Steuerung die elektrisch ansteuerbare Einrichtung in Abhängigkeit der erfaßten Signale ansteuert. Dies kann z.B. dadurch erfolgen, daß die elektronische Steuerung bei Überschreiten eines vorgegebenen Schwellenwerts die Freigabe einer Abströmöffnung veranlaßt. Es ist bei einer feineren Auswertung der elektrischen Signale auch möglich, den effektiven Querschnitt einer Abströmöffnung in Abhängigkeit der Signale zu regulieren.

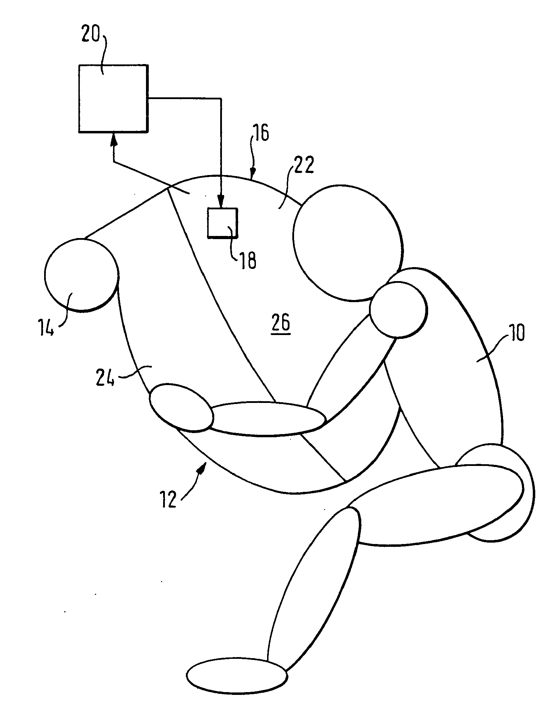

Weitere Merkmale und Vorteile der Erfindung ergeben sich aus der nachfolgenden Beschreibung und aus der beigefügten Zeichnung, auf die Bezug genommen wird. In der Zeichnung zeigt die einzige Figur schematisch ein erfindungsgemäßes Gassackmodul mit einem entfalteten Gassack im Belastungsfall.

In der Figur ist ein Fahrzeuginsasse 10 dargestellt, der in einen aufgeblasenen Gassack 12 einer erfindungsgemäßen Fahrzeuginsassen-Rückhaltevorrichtung eintaucht. Der Gassack 12, der sich aus einem Gassackmodul 14 heraus entfaltet hat, hat eine Gassackwand 16, an der eine elektrisch ansteuerbare Einrichtung 18 angeordnet ist. Die Einrichtung 18 dient zur gezielten Freigabe einer Abströmöffnung, durch die Gas aus dem Gassack 12 entweichen kann. Die Einrichtung 18 ist mit einer elektronischen Steuerung 20 verbunden, mittels der die Einrichtung 18 angesteuert wird.

Der Gassack 12 weist einen vorderen Gewebezuschnitt 22, der im aufgeblasenen Zustand des Gassacks 12 dem Fahrzeuginsassen 10 zugewandt ist, und einen hinteren Gewebezuschnitt 24 auf. Der Gassack 12 umfaßt ein Gewebe 26 mit Fasern, die mit einem nanokristallinen piezokeramischen Material beschichtet sind. Dieses Material hat die Eigenschaft, in Abhängigkeit der mechanischen Krafteinwirkung elektrische Signale zu erzeugen (Piezospannung). Das Gewebe 26 mit den beschichteten Fasern ist in geeigneter Weise mit der elektronischen Steuerung 20 verbunden.

Der Gassack 12 kann im wesentlichen vollständig aus dem Gewebe 26 mit den beschichteten Fasern gebildet sein. Es kann aber auch vorgesehen sein, nur den dem Fahrzeuginsassen 10 zugewandten Gewebezuschnitt 22, der unmittelbar die Kraft des eintauchenden Fahrzeuginsassen 10 aufnimmt, aus dem Gewebe 26 mit den beschichteten Fasern zu bilden. Schließlich ist es auch möglich, das Gewebe 26 außen- oder innenseitig auf einen Teil der Gassackwand 16, z.B. den Gewebezuschnitt 22, aufzubringen.

Im Falle einer Belastung des aufgeblasenen Gassacks 12, wie sie beim Eintauchen des Fahrzeuginsassen 10 auftritt, erzeugt das Gewebe 26 aufgrund der piezokeramischen Beschichtung eine Piezospannung, deren Größe von der Krafteinwirkung auf das Gewebe 26 abhängt. Die Piezospannung wird von der elektronischen Steuerung 20 erfaßt und ausgewertet. Überschreitet die Piezospannung einen vorgegebenen Schwellenwert, wird die elektrisch ansteuerbare Einrichtung 18 aktiviert und eine Abströmöffnung des Gassacks 12 (oder auch eines anderen Bauteils des Gassackmoduls 14) zur Verminderung des Gassackinnendrucks freigegeben.

Gemäß einer anspruchsvolleren Anwendung der Erfindung ist die elektrisch ansteuerbare Einrichtung 18 in der Lage, den effektiven Querschnitt einer Abströmöffnung des Gassacks 12 (oder auch eines anderen Bauteils des Gassackmoduls 14) zu variieren. In diesem Fall wird die Einrichtung 18 von der elektronischen Steuerung 20 so angesteuert, daß der effektive Querschnitt der Abströmöffnung auf einen von der erfaßten Piezospannung abhängigen Wert eingestellt wird. So kann der Innendruck des Gassacks 12 in der gewünschten Weise belastungsabhängig reguliert werden.

## Patentansprüche

1. Gassack für eine Fahrzeuginsassen-Rückhaltevorrichtung, mit einer Gassackwand (16), **dadurch gekennzeichnet, daß** der Gassack (12) ein Gewebe (26) mit Fasern aufweist, die mit einem Material mit piezoelektrischen Eigenschaften beschichtet sind.

2. Gassack nach Anspruch 1, **dadurch gekennzeichnet, daß** die Gassackwand (16) im wesentlichen vollständig aus dem Gewebe (26) gebildet ist.

3. Gassack nach Anspruch 1, **dadurch gekennzeichnet, daß** die Gassackwand (16) teilweise aus dem Gewebe (26) gebildet ist.

4. Gassack nach Anspruch 1, **dadurch gekennzeichnet, daß** das Gewebe (26) an der Gassackwand (16) befestigt ist.

5. Fahrzeuginsassen-Rückhaltevorrichtung mit einem Gassack (12) nach einem der vorhergehenden Ansprüche, **gekennzeichnet durch** eine elektronische Steuerung (20) zur Erfassung und Auswertung der elektrischen Signale des Gewebes (26).

6. Fahrzeuginsassen-Rückhaltevorrichtung nach Anspruch 5, **dadurch gekennzeichnet, daß** der Gassack (12) eine an der Gassackwand (16) angeordnete elektrisch ansteuerbare Einrichtung (18) aufweist.

7. Fahrzeuginsassen-Rückhaltevorrichtung nach Anspruch 6, **dadurch gekennzeichnet, daß** die elektronische Steuerung (20) die elektrisch ansteuerbare Einrichtung (18) in Abhängigkeit der erfaßten Signale ansteuert.
